# EUROPEAN PATENT APPLICATION

(11) **EP 4 650 631 A1**
(43) Date of publication of application: **19.11.2025**
(21) Application number: 23915510.4
(22) Date of filing: 31.05.2023
(51) Int. Cl.: F16K 11/056, F16K 27/02, F16K 31/36

(54) **FLOW DIVERTER AND DISHWASHER**

(30) Priority: 13.01.2023 CN 202310077213; 13.01.2023 CN 202320172539 U; 13.01.2023 CN 202310085494; 13.01.2023 CN 202320172094 U; 13.01.2023 CN 202310086038; 13.01.2023 CN 202320159075 U
(71) Applicant: Foshan Shunde Midea Washing Appliances Manufacturing Co., Ltd., Foshan, Guangdong 528311 (CN)
(72) Inventor: CHEN, Yingjie, Foshan, Guangdong 528311 (CN); DU, Guanghui, Foshan, Guangdong 528311 (CN); LI, Xiang, Foshan, Guangdong 528311 (CN); YE, Mingcai, Foshan, Guangdong 528311 (CN)
(74) Representative: Ran, Handong
(86) International application number: PCT/CN2023/097577
(87) International publication number: WO 2024/148746

(57) **Abstract**

A flow diverter (100) and a dishwasher (1000) having same. The flower diverter (100) comprises: a valve body (10) and a blocking member (50); the valve body (10) is provided with a flow channel (20), an inlet (30) and a plurality of outlets (40), the inlet (30) and the plurality of outlets (40) both being communicated with the flow channel (20), and the plurality of outlets (40) being arranged along the flow channel (20). The blocking member (5) is arranged in the valve body (10) and can move along the flow channel (20), wherein the flow channel (20) is configured to guide in a predetermined direction the flow of a fluid entering from the inlet (30), and to drive the blocking member (50) to move in a predetermined direction so as to switchably block one of the plurality of outlets (40), such that the dishwasher can conveniently achieve different washing modes.

## Description

### CROSS-REFERENCE TO RELATED APPLICATION

This application claims priority to Chinese patent application No. 202310077213.3, titled "FLOW DIVERTER AND DISHWASHER", and filed on January 13, 2023, the entire contents of which are incorporated herein by reference.

This application claims priority to Chinese patent application No. 202310085494.7, titled "FLOW DIVERTER AND DISHWASHER", and filed on January 13, 2023, the entire contents of which are incorporated herein by reference.

This application claims priority to Chinese patent application No. 202310086038.4, titled "FLOW DIVERTER AND DISHWASHER", and filed on January 13, 2023, the entire contents of which are incorporated herein by reference.

This application claims priority to Chinese patent application No. 202320172539.X, titled "FLOW DIVERTER AND DISHWASHER", and filed on January 13, 2023, the entire contents of which are incorporated herein by reference.

This application claims priority to Chinese patent application No. 202320172094.5, titled "FLOW DIVERTER AND DISHWASHER", and filed on January 13, 2023, the entire contents of which are incorporated herein by reference.

This application claims priority to Chinese patent application No. 202320159075.9, titled "FLOW DIVERTER AND DISHWASHER", and filed on January 13, 2023, the entire contents of which are incorporated herein by reference.

### FIELD

The present invention relates to the field of valve technologies, and in particular, to a flow diverter and a dishwasher having same.

### BACKGROUND

When a dishwasher is in operation, a water flow is typically pressurized by a washing pump, and then delivered through pipelines to an upper spray arm and a lower spray arm. In conventional dishwashers, a motor-driven approach is used to drive vanes of a flow diverter to rotate, for opening or closing a pipe of the upper spray arm or a pipe of the lower spray arm. The use of the motor-driven approach requires a corresponding circuit and a corresponding motor, resulting in a complex structure.

### SUMMARY

The present invention aims to solve at least one of the technical problems in the related art to some extent. To this end, one objective of the present invention is to provide a flow diverter. The flow diverter has a flow channel inside the flow diverter. The flow channel is capable of guiding fluid flowing and achieves a flow diversion function through a fluid-driven approach.

Another objective of the present invention is to provide a dishwasher. The dishwasher includes the above-mentioned flow diverter.

To realize the above objectives, the present invention discloses a flow diverter. The flow diverter includes a valve body and a blocker. The valve body has a flow channel, an inlet, and a plurality of outlets. The inlet and the plurality of outlets are in communication with the flow channel. The plurality of outlets are arranged along the flow channel. The blocker is disposed in the valve body and movable along the flow channel. The flow channel is constructed to guide fluid entering from the inlet to flow in a predetermined direction and drive the blocker to move in the predetermined direction to selectively block one of the plurality of outlets.

With the flow diverter according to the embodiments of the present invention, the flow channel is formed in the flow diverter and capable of guiding the fluid to flow. In addition, the blocker is driven to move through flowing of the fluid to switch among the outlets that are to be blocked by the blocker, which accordingly adjusts a flow diversion direction and a flow diversion path of the flow diverter to achieve the flow diversion function.

In addition, the flow diverter according to the above embodiments of the present invention can further have the following additional technical features.

Optionally, the plurality of outlets may be formed at a top surface of the flow channel. The flow channel may be provided with a lower guiding portion corresponding to a corresponding outlet of the plurality of outlets at a bottom surface of the flow channel. The lower guiding portion may have a first guiding surface extending towards the corresponding outlet in the predetermined direction. A distance between the first guiding surface and the corresponding outlet in a height direction may gradually decrease in the predetermined direction, to guide the blocker to block the corresponding outlet along with a movement of the blocker in the predetermined direction.

Optionally, the lower guiding portion may further have a second guiding surface connected to the first guiding surface and extending away from the corresponding outlet in the predetermined direction. A distance between the second guiding surface and the corresponding outlet in the height direction may gradually increase in the predetermined direction, to guide the blocker to move towards another outlet of the plurality of outlets when the blocker is no longer driven by the fluid.

Optionally, a highest point at a connection between the first guiding surface and the second guiding surface may directly face the corresponding outlet and is located upstream of a centerline of the corresponding outlet.

Optionally, a distance between the highest point at the connection and the corresponding outlet in the height direction may be greater than a size of the blocker in the height direction.

Optionally, a slope of the first guiding surface may be greater than a slope of the second guiding surface; or the slope of the first guiding surface may be smaller than the slope of the second guiding surface; or the slope of the first guiding surface may be equal to the slope of the second guiding surface.

Optionally, the flow channel may be provided with a plurality of lower guiding portions at the bottom surface of the flow channel. The plurality of lower guiding portions may be arranged in the predetermined direction and correspond to the plurality of outlets.

Optionally, the lower guiding portion may be constructed as a structure including two tracks spaced apart in a width direction of the flow channel.

Optionally, the flow channel may be provided with an upper guiding portion corresponding to a corresponding outlet of the plurality of outlets at the top surface of the flow channel. The upper guiding portion may have a third guiding surface opposite to the first guiding surface. A height of the third guiding surface relative to the top surface of the flow channel may gradually decrease in the predetermined direction. The third guiding surface has an end connected to the corresponding outlet.

Optionally, the upper guiding portion may be constructed as a structure including two tracks spaced apart in a width direction of the flow channel.

Optionally, the flow channel may be constructed as an annular channel structure. The inlet may be constructed to be in communication with the flow channel in a tangential direction of the flow channel.

Optionally, the blocker may be in a shape of a sphere. Each of the plurality of outlets may be a circular hole having a smaller radial size than the blocker.

Optionally, the valve body may include: a valve base; and a valve cover covering the valve base to define the flow channel. One of a peripheral wall of the valve base and a peripheral edge of the valve cover may be provided with a protrusion, and the other one of the peripheral wall of the valve base and the peripheral edge of the valve cover may have a recess. The protrusion may be inserted into the recess to fix the valve base and the valve cover.

Optionally, the flow diverter may further include: a position detector configured to detect a position of the blocker.

Optionally, the blocker may include a sensing portion with magnetic conductibility or magnetism. The position detector is a magnetic sensor.

Optionally, the sensing portion may be embedded in the blocker; or the sensing portion may be laminated on the blocker; or the sensing portion may be constructed as a coating on the blocker; or the blocker as a whole may be constructed as the sensing portion.

Optionally, the position detector may be disposed outside the valve body or embedded into the valve body.

Optionally, at least one of the plurality of outlets may be correspondingly provided with the position detector.

Optionally, the position detector may be constructed to be triggered when one of the plurality of outlets is blocked by the blocker.

Optionally, the position detector may be constructed to be triggered when none of the plurality of outlets is blocked by the blocker.

Optionally, the flow diverter further may include: an optocoupler sensor configured to detect a position of the blocker.

Optionally, the optocoupler sensor may be configured to be triggered when one of the plurality of outlets is blocked by the blocker.

Optionally, a plurality of optocoupler sensors may be provided. The plurality of optocoupler sensors may correspond to the plurality of outlets. One of the plurality of optocoupler sensors may be triggered when a corresponding one of the plurality of outlets is blocked by the blocker.

Optionally, the optocoupler sensor may be triggered when the blocker is located at a bottom surface of the flow channel.

Optionally, a mounting hole may be formed at each of the plurality of outlets, the optocoupler sensor nay be disposed in the mounting hole, and the optocoupler sensor may be triggered when any one of the plurality of outlets is blocked by the blocker; or a mounting hole may be formed at a corresponding position on a bottom surface of the flow channel, the optocoupler sensor may be disposed in the mounting hole, and the optocoupler sensor may be triggered when the blocker is located at the bottom surface of the flow channel.

A dishwasher according to the embodiments of the present invention includes the above-mentioned flow diverter.

With the dishwasher according to the embodiments of the present invention, the flow channel is formed in the flow diverter and capable of guiding water to flow. The blocker is driven by the water to block the outlet, enabling water discharge from different positions. In the related art, a motor-driven approach is used to drive vanes of the flow diverter to control a rotation, for opening or closing a pipe of an upper spray arm or a pipe of a lower spray arm. Compared with the related art, the present invention simplifies a structure of the dishwasher and reduces costs.

Optionally, the dishwasher may further include: a container; a washing pump disposed below the container and connected to the flow diverter to drive water to flow towards the flow diverter; and a plurality of spray arms in communication with the plurality of outlets.

Additional aspects and advantages of the present invention will be provided at least in part in the following description, or will become apparent at least in part from the following description, or can be learned from practicing of the present invention.

### BRIEF DESCRIPTION OF THE DRAWINGS

In order to clearly explain technical solutions of embodiments of the present invention or in the related art, drawings used in description of the embodiments or the related art are briefly described below. Obviously, the drawings as described below are merely some embodiments of the present invention. Based on structures illustrated by these drawings, other drawings can be obtained by those skilled in the art without creative effort.
FIG. 1 is a schematic exploded view of a structure of a flow diverter according to an embodiment of the present invention.
FIG. 2 is a schematic view of an internal structure of a flow diverter according to an embodiment of the present invention, in which a valve cover and a blocker are hidden.
FIG. 3 is a schematic sectional view of a flow diverter according to an embodiment of the present invention.
FIG. 4 is a schematic view of an internal structure of a flow diverter according to an embodiment of the present invention.
FIG. 5 is a schematic top view of a flow diverter according to an embodiment of the present invention.
FIG. 6 is a schematic view of a valve cover of a flow diverter according to an embodiment of the present invention.
FIG. 7 is a schematic view of a flow diverter according to an embodiment of the present invention.
FIG. 8 is a schematic structural view of a flow diverter according to an embodiment of the present invention, in which a valve cover is hidden.
FIG. 9 is a schematic structural view of a flow diverter according to an embodiment of the present invention, in which a valve cover and a blocker are hidden.
FIG. 10 is a schematic view of an internal structure of a dishwasher according to an embodiment of the present invention.

Reference numerals of the accompanying drawings:
dishwasher1000, flow diverter 100, valve body 10, valve cover 11, protrusion 111, valve base 12, recess 121, flow channel 20, inlet 30, outlet 40, blocker 50, lower guiding portion 60, first guiding surface 61, second guiding surface 62, first track 63, upper guiding portion 70, third guiding surface 71, second track 72, position detector 80, optocoupler sensor 90, mounting hole 91, container 200, washing pump 300, spray arm 400.

### DETAILED DESCRIPTION OF THE EMBODIMENTS

Embodiments of the present invention will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present invention.

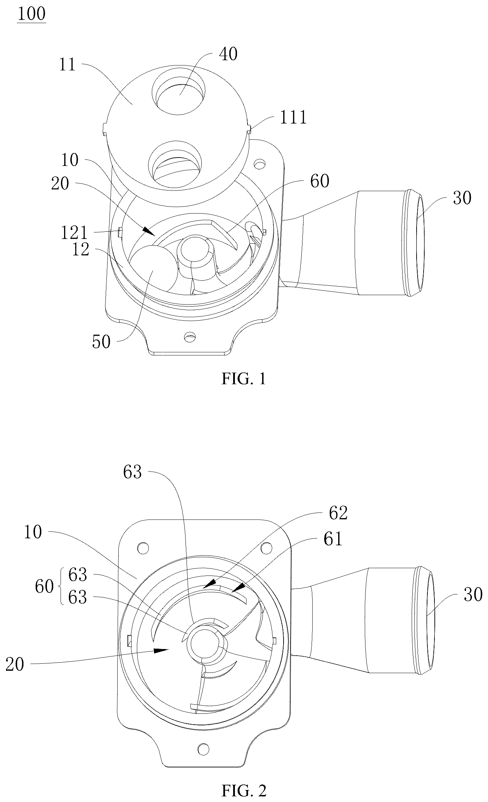

Referring to FIG. 1 to FIG. 4, the present invention provides a flow diverter 100. The flow diverter 100 includes a valve body 10 and a blocker 50. The valve body 10 has a flow channel 20, an inlet 30, and a plurality of outlets 40. The inlet 30 and the plurality of outlets 40 are in communication with the flow channel 20. The plurality of outlets 40 are arranged along the flow channel 20. The blocker 50 is movably disposed in the flow channel 20 of the valve body 10. The flow channel 20 is configured to guide fluid entering from the inlet 30 to flow in a predetermined direction. That is, after the fluid enters the flow channel 20, most or all of the fluid is guided by the flow channel 20 to flow in the predetermined direction, which is a unidirectional direction parallel to an extension direction of the flow channel 20. In a process of guiding the fluid flowing by the flow channel 20, the blocker 50 is driven to move in the predetermined direction, enabling the blocker 50 to block one of the plurality of outlets 40. In addition, the blocker 50 is adapted to be driven by the fluid to switch among the outlets 40 that are to be blocked by the blocker 50.

During use of the flow diverter 100, the fluid can enter the flow channel 20 from the inlet 30. The fluid is guided by the flow channel 20 to flow in the predetermined direction. Driven by the fluid, the blocker 50 moves to a position opposite to one of the plurality of outlets 40 and is adapted to block the outlet 40, allowing the fluid to flow out of the unblocked outlets 40. Further, under a driving action of the fluid, the blocker 50 can switch among the outlets 40 that are to be blocked by the blocker 50. For example, when the fluid enters the flow channel 20 at different timings, in different manners, or with different driving forces, the blocker 50 can be driven to block different outlets 40, achieving a purpose of changing a flow diversion direction, a flow diversion path, or the like of the flow diverter 100.

With the flow diverter 100 according to the embodiments of the present invention, by forming the flow channel 20 in the flow diverter 100, the fluid entering from the inlet 30 is guided by the flow channel 20 to flow in the predetermined direction. In addition, the blocker 50 is driven by the fluid to block different outlets 40, in such a manner that the fluid can flow out from different positions, achieving a flow diversion function. Moreover, in the present invention, the flow channel 20 is used to guide the fluid to flow and the blocker 50 is driven by the fluid, which simplifies a structure of the flow diverter 100. Further, a mechanical driving method of the blocker 50 enables simple control and a low failure rate of the flow diverter 100, which optimizes stability and reliability of the flow diverter 100 while lowering costs.

In the present invention, one blocker 50 may be provided. For example, when two outlets 40 are formed, the blocker 50 can be used to block one of the two outlets 40, allowing the fluid to flow out from another one of the two outlets 40. Additionally, when more than three outlets 40 are formed, the blocker 50 can be used to block one or two of the outlets 40. In the present invention, a plurality of blockers 50 may be provided and formed integrally to enable the fluid to flow out from different outlets 40, enriching flow diversion modes of the flow diverter 100.

Referring to FIG. 1 to FIG. 3, in some embodiments of the present invention, the flow channel 20 may be configured in a shape of a ring (such as a circular ring, an elliptical ring, a rectangular ring, etc.). The predetermined direction may be a clockwise direction or a counterclockwise direction of the flow channel 20. The fluid can flow in the counterclockwise direction along the flow channel 20. The plurality of outlets 40 may be arranged along the flow channel 20. That is, the plurality of outlets 40 may be arranged in the counterclockwise direction. The inlet 30 may be set to extend in a tangential direction of the flow channel 20 to facilitate flowing of water in the predetermined direction. Alternatively, a starting end of the flow channel 20 may be set to be lower than a terminal end of the flow channel 20 to create a height difference between the starting end of the flow channel 20 and the terminal end of the flow channel 20, promoting flowing of the fluid in the predetermined direction. Of course, in the present invention, the flow channel 20 may also be a straight flow channel 20, a curved flow channel 20, or the like. A shape of the flow channel 20 can be adjusted as desired and is not limited in the present invention. The above description merely represents several specific embodiments of the present invention.

Further, it should be noted that the flow diverter 100 of the present invention is primarily applicable for flow diversion of the fluid, enabling the fluid entering from the inlet 30 into the flow diverter 100 to selectively flow out of the outlet 40. The flow diverter 100 of the present invention is applicable for flow diversion of various fluids, including liquids and gases, especially suitable for flow diversion of water. While the present invention mainly describes the flow diversion of water as an example, particularly focusing on an application of the flow diverter 100 in a dishwasher, the protection scope of the present invention is not limited to the example. The flow diverter 100 of the present invention is equally applicable to other fluids or other use environments.

The outlet 40 of the flow diverter 100 of the present invention may be formed at different parts of the flow channel 20. For example, the outlet 40 may be formed at a side surface of the flow channel 20. The fluid enters the flow channel 20 from the inlet 30 and is guided by the flow channel 20 to flow to drive the blocker 50 to move for blocking one of the plurality of outlets 40. The liquid flows out of the unblocked outlet 40, achieving the flow diversion function.

Referring to FIG. 1 and FIG. 2, in some embodiments of the present invention, the outlet 40 may be formed at a top surface of the flow channel 20. The plurality of outlets 40 are arranged at intervals in the predetermined direction parallel to the flow channel 20. The blocker 50 is adapted to move in an up-down direction to block or open a corresponding outlet 40 of the plurality of outlets 40. The flow channel 20 may be provided with a lower guiding portion 60 corresponding to the outlet 40 at a bottom surface of the flow channel 20. The lower guiding portion 60 may have a first guiding surface 61 extending towards the corresponding outlet 40 in the predetermined direction. A distance between the first guiding surface 61 and the corresponding outlet 40 in a height direction gradually decreases in the predetermined direction, to guide the blocker 50 to block the corresponding outlet 40 along with a movement of the blocker 50 in the predetermined direction. In this way, when the fluid enters the flow channel 20 from the inlet 30 and flows in the predetermined direction under guidance of the flow channel 20, the blocker 50 gradually rises in the predetermined direction under guidance of the first guiding surface 61 of the lower guiding portion 60. Through the guidance of the flow channel 20 on the fluid and a driving action exerted by the fluid on the blocker 50, the blocker 50 stably blocks the outlet 40, improving blocking effectiveness of the outlet 40 and optimizing flow diversion performance and the stability of the flow diverter 100.

The lower guiding portion 60 may further have a second guiding surface 62 that may be connected to the first guiding surface 61 and extend away from the corresponding outlet 40 in the predetermined direction. A distance between the second guiding surface 62 and the corresponding outlet 40 in the height direction gradually increases in the predetermined direction. When the outlet 40 is blocked by the blocker 50, the blocker 50 is disengaged from the second guiding surface 62. In this way, when the blocker 50 is no longer driven by the fluid, the second guiding surface 62 guides the blocker 50 to move towards another outlet 40, in such a manner that the blocker 50 is prevented from returning back along the first guiding surface 61 after blocking the outlet 40, allowing the blocker 50 to continuously move forwards within the flow channel 20.

The flow diverter 100 of the present invention can be applied in the dishwasher or other devices requiring liquid flow diversion. When the flow diverter 100 is applied in the dishwasher, a position of the blocker 50 can be adjusted based on activation or deactivation of a washing pump to achieve a purpose of blocking different outlets 40.

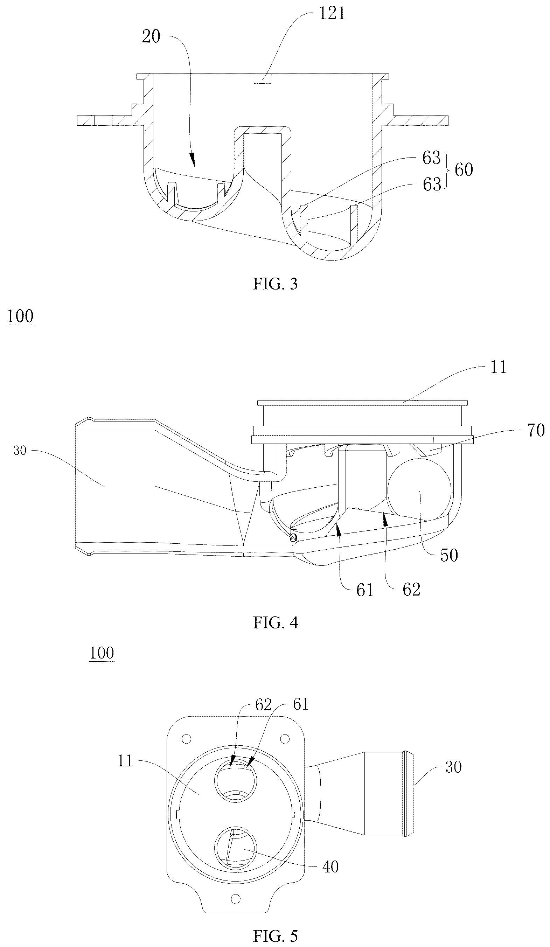

Further, referring to FIG. 1 and FIG. 5, the lower guiding portion 60 may have the first guiding surface 61 and the second guiding surface 62. Each of the first guiding surface 61 and the second guiding surface 62 extends in the predetermined direction. The distance between the first guiding surface 61 and the corresponding outlet 40 in the height direction gradually decreases in the predetermined direction. The distance between the second guiding surface 62 and the corresponding outlet 40 in the height direction gradually increases in the predetermined direction. A highest point exists at a connection between the first guiding surface 61 and the second guiding surface 62. The highest point may directly face the corresponding outlet 40 and is located upstream of a centerline of the corresponding outlet 40. When the flow diverter 100 is applied in the dishwasher, the water enters the flow channel 20 from the inlet 30 when the washing pump is in operation. Guided by the flow channel 20, the water flows in the predetermined direction. With the lower guiding portion 60, the blocker 50 is subjected to forward thrust and upward thrust from the water, causing the blocker 50 to gradually rise along the first guiding surface 61. After passing the highest point, the blocker 50 is disengaged from the lower guiding portion 60 and reaches the position of the corresponding outlet 40 to block the corresponding outlet 40. As a result, the water flows out of the unblocked outlet 40. When the washing pump of the dishwasher stops operation, the blocker 50 moves to a lower position along the second guiding surface 62 due to gravity. When the washing pump resumes operation, the blocker 50 is driven to the next outlet 40. In this way, the blocker 50 can be prevented from returning back after the washing pump stops operation. Through an arrangement of the first guiding surface 61 and the second guiding surface 62, and enabling the highest point at the connection between the first guiding surface 61 and the second guiding surface 62 to face the corresponding outlet 40 and to be located upstream of the centerline of the corresponding outlet 40, the blocker 50 can move in the predetermined direction within the flow channel 20. Consequently, the blocker 50 can move in a predetermined manner and blocks the corresponding outlet 40, improving the stability during the operation of the flow diverter 100.

Referring to FIG. 4, in the above embodiment, a distance between the highest point at the connection between the first guiding surface 61 and the second guiding surface 62 and the corresponding outlet 40 in the height direction may be greater than a size of the blocker 50 in the height direction. The highest point at the connection between the first guiding surface 61 and the second guiding surface 62 faces the corresponding outlet 40 and is located upstream of the centerline of the corresponding outlet 40. That is, the position of the outlet 40 is offset forwards relative to the highest point. In this way, after the blocker 50 moves along the first guiding surface 61 and passes the highest point, the corresponding outlet 40 can be effectively blocked, improving the stability of the operation of the flow diverter 100.

The first guiding surface 61 and the second guiding surface 62 of the present invention can be designed in different forms. For example, the first guiding surface 61 may have a slope greater than, smaller than, or equal to a slope of the second guiding surface 62. The forms of the first guiding surface 61 and the second guiding surface 62 can be adjusted based on an actual use environment of the flow diverter 100 and a size of an internal space of the flow diverter 100, to ensure that the flow diverter 100 can operate stably and efficiently.

For example, as illustrated in FIG. 1, the first guiding surface 61 may have the slope greater than the slope of the second guiding surface 62. When the washing pump is in operation and the water enters the flow channel 20 from the inlet 30, by designing the slope of the first guiding surface 61 to be greater than the slope of the second guiding surface 62, the blocker 50 can quickly move along the first guiding surface 61 to reach the highest point after being subjected to forward thrust and upward thrust of the water in a water inlet direction of the inlet 30, and then move to the outlet 40 to block the outlet 40 after passing the highest point. In this way, an efficiency of the blocker 50 in blocking the outlet can be improved, improving operational performance of the flow diverter. When the washing pump stops operation, the blocker 50 can fall under an action of gravity along the second guiding surface 62 to the bottom surface of the flow channel 20.

The first guiding surface 61 may also have the slope smaller than or equal to the slope of the second guiding surface 62. Depending on the size of the internal space of the flow diverter 100, the slope and a length of each of the first guiding surface 61 and the second guiding surface 62 can be adjusted. For example, the slope of the first guiding surface 61 may be smaller than that of the second guiding surface 62, and the length of the first guiding surface 61 may be longer than that of the second guiding surface 62. When the washing pump is in operation and the water enters the flow channel 20 from the inlet 30, the blocker 50 can stably move along the first guiding surface 61 to reach the highest position after being subjected to forward thrust and upward thrust of the water in the water inlet direction of the inlet 30, and then move to the outlet 40 to block the outlet 40 after passing the highest point. When the washing pump stops operation, the blocker 50 can quickly fall under the action of gravity along the second guiding surface 62 to the bottom surface of the flow channel 20. It should be understood that the slope of the first guiding surface 61 may be equal to that of the second guiding surface 62, and the length of the first guiding surface 61 may be equal to that of the second guiding surface 62.

Referring to FIG. 1, in some embodiments of the present invention, the plurality of outlets 40 may be formed at the top surface of the flow channel 20 and arranged in the predetermined direction, and the flow channel 20 may be provided with a plurality of lower guiding portions 60 corresponding to the plurality of outlets 40 at the bottom surface of the flow channel 20. In a process of driving the blocker 50, the blocker 50 moves in the predetermined direction and rises to a predetermined position under guidance of the lower guiding portion 60 to block the corresponding outlet 40, prompting the fluid to flow out from other outlets 40. When the blocker 50 is no longer driven by the fluid, the lower guiding portion 60 guides the blocker 50 to move towards another outlet 40. By setting the lower guiding portions 60 corresponding to the outlets 40, a movement direction of the blocker 50 within the flow channel 20 can be guided, in such a manner that the blocker 50 can move within the flow channel 20 in the predetermined direction to block or open the corresponding outlet 40, achieving a purpose of stable water discharge.

Referring to FIG. 1 and FIG. 3, in some embodiments of the present invention, the lower guiding portion 60 may be constructed as a multi-track structure including a plurality of tracks arranged at intervals in a width direction of the flow channel 20. For example, the lower guiding portion 60 may include a plurality of first tracks 63 that are arranged at intervals in the width direction of the flow channel 20. In this way, the blocker 50 can move stably at the lower guiding portion 60 to block or open the outlet 40, which prevents the blocker 50 from slipping during a movement, ensuring stable performance and the low failure rate of the flow diverter 100. Preferably, the multi-track structure is a dual-track structure. That is, the lower guiding portion 60 may include two first tracks 63. The blocker 50 may be a sphere to realize that the blocker 50 can move stably at the tracks.

With the multi-track structure, flowing of the fluid through the lower guiding portion 60 can be facilitated, which can prevent the lower guiding portion 60 from blocking the fluid, reducing a flow resistance and optimizing performance of the flow diverter 100.

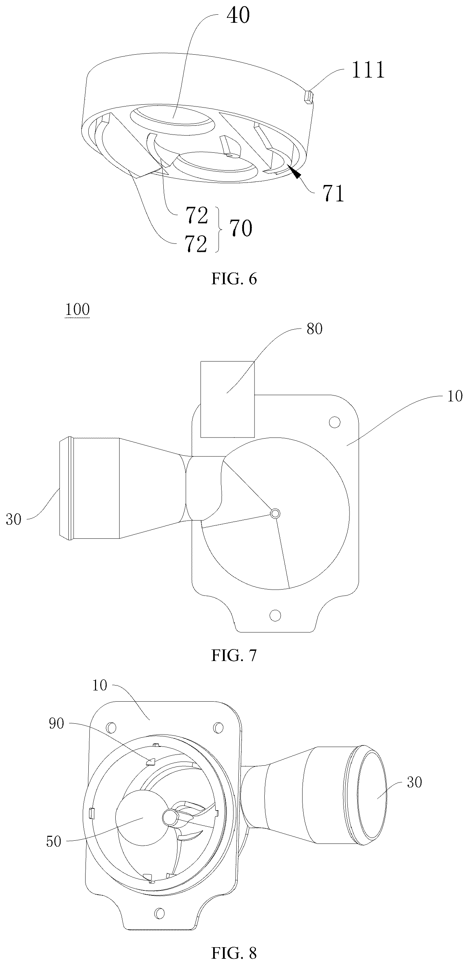

Referring to FIG. 1 and FIG. 6, in some embodiments of the present invention, the flow channel 20 may be provided with an upper guiding portion 70 corresponding to the outlet 40 at the top surface of the flow channel 20. The upper guiding portion 70 may have a third guiding surface 71. The lower guiding portion 60 may be disposed at the bottom surface of the flow channel 20 and has the first guiding surface 61 and the second guiding surface 62. The third guiding surface 71 is opposite to the first guiding surface 61. A height of the third guiding surface 71 relative to the top surface of the flow channel 20 gradually decreases in the predetermined direction, and the third guiding surface has an end connected to the corresponding outlet 40. In the dishwasher, when the washing pump is in operation and after the water enters the flow channel 20 from the inlet 30, flowing of the water is guided by the flow channel 20. The blocker 50, under forward thrust and upward thrust of the water in the water inlet direction of the inlet 30, rises gradually along the first guiding surface 61 to be disengaged from the first guiding surface 61 and to be in contact with the upper guiding portion 70, and reaches the position of the corresponding outlet 40 to block the corresponding outlet 40. The water flows out of the unblocked outlet 40. When the washing pump stops operation, the blocker 50 falls under the action of gravity along the second guiding surface 62 to the bottom surface of the flow channel 20. Through a cooperation between the first guiding surface 61 and the third guiding surface 71, the blocker 50 can stably block the corresponding outlet 40 along the flow channel 20. When the washing pump stops the operation, the blocker 50 falls along the second guiding surface 62 to the bottom surface of the flow channel 20, improving the stability during the operation of the flow diverter 100.

Referring to FIG. 6, the upper guiding portion 70 may be constructed as a multi-track structure including a plurality of tracks arranged at intervals in the width direction of the flow channel 20. For example, the upper guiding portion 70 may include a plurality of second tracks 72 that are arranged at intervals in the width direction of the flow channel 20. In this way, as the blocker 50 gradually rises along the first guiding surface 61 and comes into contact with the upper guiding portion 70, the blocker 50 can move stably at the plurality of second tracks 72 to the outlet 40 to block the outlet 40, which prevents the blocker 50 from slipping during a movement, ensuring the stable performance and the low failure rate of the flow diverter 100. Preferably, the multi-track structure is a dual-track structure. That is, the upper guiding portion 70 may include two second tracks 72. The blocker 50 may be a sphere. With the two second tracks 72, the blocker 50 can move stably along the upper guiding portion 70, improving the stability of the operation of the flow diverter 100.

In the present invention, the blocker 50 may be designed to float on a liquid surface. That is, when a liquid level in the flow channel 20 rises, the blocker 50 can rise as the liquid level rises or fall as the liquid level falls. For example, in the dishwasher, when the washing pump is in operation, the water enters the inlet 30, causing the blocker 50 to move upwards in a direction of the flow channel 20 to block the outlet 40. When the washing pump of the dishwasher stops operation, the blocker 50 moves downwards due to gravity. Of course, an average density of the blocker 50 in the present invention may also be greater than a density of the liquid, in such a manner that a state where the blocker 50 blocks the outlet 40 is maintained using a pressure and thrust of the fluid.

As illustrated in FIG. 1, in some embodiments of the present invention, the flow channel 20 is constructed as an annular channel structure, and the inlet 30 is constructed to allow the water to enter in a circumferential direction of the flow channel 20, driving a movement of the blocker 50 along the flow channel 20. After entering the flow channel 20 from the inlet 30, the fluid flows in the predetermined direction of the flow channel 20, and drives the blocker 50 to move to the predetermined position to block the corresponding outlet 40, achieving water discharge along a designated flow path. In this way, the structure of the flow diverter 100 is simplified. With the flow channel 20, the flowing of the liquid is guided by the flow channel 20, which facilitates driving the blocker 50 using the fluid. In addition, the blocker 50 can move in the predetermined direction of the flow channel 20, which makes it convenient for the blocker 50 to expose or cover the plurality of outlets 40, facilitating a rotation and an adjustment of a flow direction of the liquid.

An axis of the inlet 30 may be offset from a center of the flow channel 20. Therefore, when the fluid enters the flow channel 20 from the inlet 30, the fluid flows in the predetermined direction, which helps restrict the flow direction of the fluid. Additionally, the axis of the inlet 30 may be set to extend in the tangential direction of the flow channel 20.

In the above embodiments, the blocker 50 of the flow diverter 100 may be in a shape of a sphere, and the outlet 40 may be a circular hole having a smaller radial size than the blocker 50. Therefore, after the blocker 50 moves to the outlet 40, the blocker 50 can be better engaged with the outlet 40 to block the outlet 40, preventing water leakage after the outlet 40 is blocked.

Referring to FIG. 1, in some embodiments of the present invention, the valve body 10 may include a valve base 12 and a valve cover 11. The valve cover 11 may cover the valve base 12 to define the flow channel 20. A peripheral wall of the valve base 12 may be provided with a protrusion 111, while a peripheral edge of the valve cover 11 may have a recess 121. The protrusion 111 is inserted into the recess 121 to fix the valve base 12 and the valve cover 11. Alternatively, the peripheral wall of the valve base 12 may have the recess 121, while the peripheral edge of the valve cover 11 may be provided with the protrusion 111. The protrusion 111 is inserted into the recess 121 to fix the valve base 12 and the valve cover 11. One or more protrusions 111 and one or more recesses 121 may be provided. A quantity of the protrusions 111 corresponds to that of the recesses 121. With the valve base 12 and the valve cover 11, and through an assembly of the protrusion 111 and the recess 121, a structure of the flow channel 20 of the flow diverter 100 becomes more stable, and a connection between the protrusion 111 and the recess 121 simplifies an assembly process.

In some embodiments of the present invention, the flow diverter may further include a position detector 80. The position detector 80 can be configured to detect the position of the blocker 50, e.g., the position of the blocker 50 when blocking different outlets 40, or the corresponding position detector 80 can be triggered when no outlet 40 is blocked by the blocker 50. Therefore, the purpose of changing the flow diversion direction, the flow diversion path, or the like of the flow diverter 100 can be achieved to enable the simple control and the low failure rate of the flow diverter 100, which optimizes the stability and the reliability of the flow diverter 100 while lowering the costs.

Specifically, by detecting the position of the blocker with the position detector 80, after the blocker 50 moves to the predetermined position, the position detector 80 generates a position signal and transmits the position signal to electronic control software of the dishwasher 1000. The electronic control software can be configured to record a current position of the blocker, and calculate and control the activation or the deactivation of the washing pump to control the blocker 50 to be moved to the designated outlet, achieving a purpose of controlling water discharge from different outlets.

Referring to FIG. 7, in some embodiments of the present invention, the position detector 80 may be located outside the valve body 10. When the position detector 80 is located outside the valve body 10, the position detector 80 is triggered when the blocker 50 blocks or unblocks the outlet 40. The position detector 80 may also be embedded in the valve body 10. At least one of the plurality of outlets 40 may be correspondingly provided with the position detector 80. In this way, when the blocker 50 blocks the outlet 40, the corresponding position detector 80 can be triggered to allow the position detector 80 to efficiently detect the position of the blocker 50, ensuring more stable operation of the flow diverter 100.

The position detector 80 can be constructed to be triggered when the blocker 50 blocks the outlet 40. For example, the position detector 80 may be disposed outside the valve body 10. The position detector 80 may be a magnetic sensor, while the blocker 50 can serve entirely as a magnetic sensing portion capable of sensing the position of the blocker 50 based on magnetic induction strength. When the outlet 40 is blocked by the blocker 50, the magnetic sensor is triggered and generates the position signal. The position detector 80 may be also disposed inside the valve body 10. For example, the position detector 80 may be disposed at the outlet 40. The position detector 80 may be the magnetic sensor, while the magnetic sensing portion may be embedded in the blocker 50. When the blocker 50 blocks the outlet 40, the magnetic sensor is triggered and generates the position signal. When the position detector 80 is disposed in the valve body 10, the position detector 80 may be disposed at the position corresponding to each outlet 40 or at the position corresponding to at least one of the plurality of outlets 40.

It should be understood that the position detector 80 may also be constructed to be triggered when the blocker 50 unblocks the outlet 40. For example, the position detector 80 is disposed outside the valve body 10. When the blocker 50 unblocks the outlet and is at a lower position inside the valve body 10, the position of the blocker 50 is sensed based on the magnetic induction strength, and the magnetic sensor is triggered and generates the position signal. It should be understood that the position detector 80 may also be disposed inside the valve body 10, where different magnetic induction strengths are used to calculate the position information of the blocker 50 and generate the position signal.

Further, the blocker 50 may include a sensing portion with magnetic conductibility or magnetism, and the position detector 80 may be a magnetic sensor. In this way, the position of the blocker 50 can be accurately detected by the position detector 80.

The sensing portion of the blocker 50 can take various forms. The entire blocker 50 may be constructed as the sensing portion, or a part of the blocker 50 may be constructed as the sensing portion. The sensing portion may be embedded in the blocker 50, the sensing portion may be laminated on the blocker 50, or the sensing portion may be constructed as a coating on the blocker 50. For example, the blocker 50 may be made of iron, cobalt, nickel, a metallic alloy, a magnet, or the like. The blocker 50 may be made entirely or partially of a material with magnetic conductibility or magnetism. The position detector 80 is the magnetic sensor capable of detecting the position of the blocker 50. The sensing portion of the blocker 50 can be flexibly designed without constraints in terms of shape, material, or use environment to enable the position detector 80 to effectively detect the position of the blocker 50. Also, a form of the sensing portion of the blocker 50 can be adjusted based on different use environments to ensure that the position detector 80 can accurately detect the position of the blocker 50.

Specifically, when the flow diverter 100 is applied in the dishwasher, the position of the blocker 50 can be adjusted based on the activation or the deactivation of the washing pump to achieve the purpose of blocking different outlets 40. For example, in a static state, the blocker 50 is located at a lower part of flow channel 20 due to gravity. When the washing pump of the dishwasher is in operation, the water flows from the inlet 30 into the flow channel 20 and flows in the extension direction of the flow channel 20. The blocker 50, under forward thrust and upward thrust from the water, rises along the first guiding surface 61 of the lower guiding portion 60 to be disengaged from the first guiding surface 61, and is guided to the position of the outlet 40 to block the outlet 40. The water is discharged from the unblocked outlet 40. The position detector 80 is capable of sensing the position of the blocker 50 and converting position information into a sensing signal. The sensing signal is fed by the position detector 80 to the electronic control software of the dishwasher. The electronic control software can be configured to record current position information of the blocker 50, and calculate and control the activation or the deactivation of the washing pump to enable the blocker 50 to move until the designated outlet 40 is blocked, achieving the purpose of controlling water discharge from different outlets, and optimizing a water diversion effect and the stability of the flow diverter 100.

In some embodiments of the present invention, the flow diverter may further include an optocoupler sensor 90. The optocoupler sensor 90 can be configured to detect the position of the blocker 50, and convert the position information into the sensing signal in response to detecting that the blocker 50 is located at a designated position. Therefore, the purpose of changing the flow diversion direction, the flow diversion path, or the like of the flow diverter 100 can be achieved.

In some embodiments of the present invention, the optocoupler sensor 90 can be constructed to be triggered when the blocker 50 blocks the outlet 40, and emit or receive a light source. When the fluid enters the flow channel 20 from the inlet 30, the blocker 50 is driven to move in the predetermined direction for blocking the outlet 40. In this way, the light source is interrupted, and the position signal is generated by the optocoupler sensor 90. Therefore, the purpose of changing the flow diversion direction, the flow diversion path, or the like of the flow diverter 100 can be achieved.

A plurality of optocoupler sensors 90 may be provided and correspond to the plurality of outlets 40. In this way, when the blocker 50 blocks the outlet 40, the position of the blocker 50 can be accurately detected and a signal can be generated, which improves accuracy of detection by the optocoupler sensor 90, improving the stability of the operation of the flow diverter 100.

Referring to FIG. 8, the optocoupler sensor 90 may be triggered when the blocker 50 is located at a bottom surface of the flow channel 20, and the optocoupler sensor 90 can be configured to emit or receive the light source. For example, in the dishwasher, when the washing pump is in operation, the water enters the flow channel 20 from the inlet 30. The blocker 50, under forward thrust and upward thrust from the water, rises along the lower guiding portion 60 to block the outlet 40. When the washing pump stops operation, the blocker 50 falls to the bottom surface of the flow channel 20 under gravity. In this way, the light source is interrupted, and the position signal is generated by the optocoupler sensor 90 and fed back to the electronic control software of the dishwasher. The electronic control software can be configured to record a current position of the blocker 50, and calculate and control a risk of the activation or the deactivation of the washing pump to enable the blocker 50 to move to the designated outlet 40. Therefore, the purpose of controlling water discharge from different outlets 40 can be achieved.

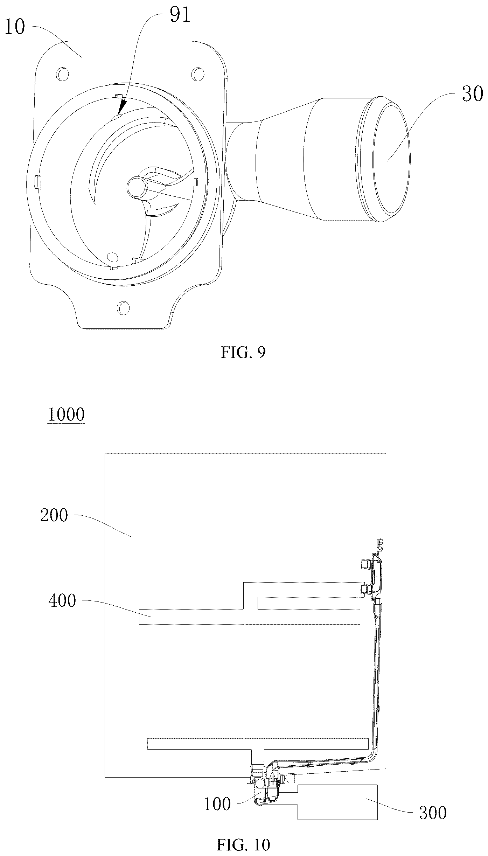

Referring to FIG. 9, in some embodiments of the present invention, a mounting hole 91 may be formed at the outlet 40 of the flow diverter 100 or at a corresponding position on the bottom surface of the flow channel 20, and the optocoupler sensor 90 may be disposed in the mounting hole 91. The optocoupler sensor 90 is fixed in the mounting hole 91, in such a manner that the position of the blocker 50 can be better detected, achieving the purpose of controlling water discharge from different outlets 40.

According to the embodiments of the present invention, the dishwasher may adopt the above structure of the flow diverter 100, which allows selective switching of the outlet 40 by means of the water, achieving the flow diversion. In this way, different washing needs of the dishwasher are met, and performance of the dishwasher is optimized, enabling convenient switching between different washing modes of the dishwasher.

Referring to FIG. 10, the dishwasher 1000 may further include a container 200, a washing pump 300, and a plurality of spray arms 400. The washing pump 300 is connected to the flow diverter 100 to drive the water to flow towards the flow diverter 100. A quantity of spray arms 400 may correspond to that of the outlets 40. The spray arm 400 is in communication with the outlet 40. The water can flow from the outlet 40 to the corresponding spray arm 400 to be sprayed out from the spray arm 400 for performing washing. The flow diverter 100 may be disposed below the container 200 and connected to each of the washing pump 300 and the spray arm 400. When the dishwasher 1000 is in operation, the washing pump 300 drives the water to enter the flow diverter 100 from the inlet 30. Driven by the water, the blocker 50 selectively switches to the outlet 40 to be blocked. The water flows from the unblocked outlet 40 to the corresponding spray arm 400. Therefore, the washing is completed. Through controlling the activation or the deactivation of the washing pump 300, the blocker 50 can be moved to the designated outlet 40, achieving a purpose of water discharge from different spray arms 400.

In addition, terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present invention, "plurality" means at least two, unless otherwise specifically defined.

Throughout this specification, description with reference to "an embodiment," "some embodiments," "an example," "a specific example," or "some examples," means that a particular feature, structure, material, or characteristic described in connection with the embodiment or example is included in at least one embodiment or example of the present invention. The appearances of the above phrases in various places throughout this specification are not necessarily referring to the same embodiment or example of the present invention. Further, the particular features, structures, materials, or characteristics described here may be combined in any suitable manner in one or more embodiments or examples. In addition, different embodiments or examples and features of different embodiments or examples described in the specification may be combined by those skilled in the art without mutual contradiction.

Although embodiments of the present invention have been shown and described above, it should be understood that the above embodiments are merely exemplary, and cannot be construed to limit the present invention. For those skilled in the art, changes, alternatives, and modifications can be made to the embodiments without departing from the scope of the present invention.

## Claims

1. A flow diverter, comprising:
a valve body having a flow channel, an inlet, and a plurality of outlets, the inlet and the plurality of outlets being in communication with the flow channel, and the plurality of outlets being arranged along the flow channel; and
a blocker disposed in the valve body and movable along the flow channel,
wherein the flow channel is constructed to: guide fluid entering from the inlet to flow in a predetermined direction, and drive the blocker to move in the predetermined direction to selectively block one of the plurality of outlets.

2. The flow diverter according to claim 1, wherein:
the plurality of outlets are formed at a top surface of the flow channel; and
the flow channel is provided with a lower guiding portion corresponding to a corresponding outlet of the plurality of outlets at a bottom surface of the flow channel, and the lower guiding portion has a first guiding surface extending towards the corresponding outlet in the predetermined direction, a distance between the first guiding surface and the corresponding outlet in a height direction gradually decreasing in the predetermined direction, to guide the blocker to block the corresponding outlet along with a movement of the blocker in the predetermined direction.

3. The flow diverter according to claim 2, wherein the lower guiding portion further has a second guiding surface connected to the first guiding surface and extending away from the corresponding outlet in the predetermined direction, a distance between the second guiding surface and the corresponding outlet in the height direction gradually increasing in the predetermined direction, to guide the blocker to move towards another outlet of the plurality of outlets when the blocker is no longer driven by the fluid.

4. The flow diverter according to claim 3, wherein a highest point at a connection between the first guiding surface and the second guiding surface directly faces the corresponding outlet and is located upstream of a centerline of the corresponding outlet.

5. The flow diverter according to claim 4, wherein a distance between the highest point at the connection and the corresponding outlet in the height direction is greater than a size of the blocker in the height direction.

6. The flow diverter according to any one of claims 3 to 5, wherein:
a slope of the first guiding surface is greater than a slope of the second guiding surface; or
the slope of the first guiding surface is smaller than the slope of the second guiding surface; or
the slope of the first guiding surface is equal to the slope of the second guiding surface.

7. The flow diverter according to any one of claims 2 to 6, wherein the flow channel is provided with a plurality of lower guiding portions at the bottom surface of the flow channel, the plurality of lower guiding portions being arranged in the predetermined direction and corresponding to the plurality of outlets.

8. The flow diverter according to any one of claims 2 to 7, wherein the lower guiding portion is constructed as a structure comprising two tracks spaced apart in a width direction of the flow channel.

9. The flow diverter according to any one of claims 2 to 8, wherein the flow channel is provided with an upper guiding portion corresponding to a corresponding outlet of the plurality of outlets at the top surface of the flow channel, the upper guiding portion has a third guiding surface opposite to the first guiding surface, a height of the third guiding surface relative to the top surface of the flow channel gradually decreasing in the predetermined direction, and the third guiding surface having an end connected to the corresponding outlet.

10. The flow diverter according to claim 9, wherein the upper guiding portion is constructed as a structure comprising two tracks spaced apart in a width direction of the flow channel.

11. The flow diverter according to any one of claims 2 to 10, wherein:
the flow channel is constructed as an annular channel structure; and
the inlet is constructed to be in communication with the flow channel in a tangential direction of the flow channel.

12. The flow diverter according to any one of claims 1 to 11, wherein:
the blocker is in a shape of a sphere; and
each of the plurality of outlets is a circular hole having a smaller radial size than the blocker.

13. The flow diverter according to any one of claims 1 to 12, wherein the valve body comprises:
a valve base; and
a valve cover covering the valve base to define the flow channel,
wherein one of a peripheral wall of the valve base and a peripheral edge of the valve cover is provided with a protrusion, and the other one of the peripheral wall of the valve base and the peripheral edge of the valve cover is provided with a recess, the protrusion being inserted into the recess to fix the valve base and the valve cover.

14. The flow diverter according to any one of claims 1 to 13, further comprising a position detector configured to detect a position of the blocker.

15. The flow diverter according to claim 14, wherein:
the blocker comprises a sensing portion with magnetic conductibility or magnetism; and
the position detector is a magnetic sensor.

16. The flow diverter according to claim 15, wherein:
the sensing portion is embedded in the blocker; or
the sensing portion is laminated on the blocker; or
the sensing portion is constructed as a coating on the blocker; or
the blocker as a whole is constructed as the sensing portion.

17. The flow diverter according to claim 14, wherein:
the position detector is disposed outside the valve body or embedded into the valve body; and/or
at least one of the plurality of outlets is correspondingly provided with the position detector.

18. The flow diverter according to claim 14, wherein:
the position detector is constructed to be triggered when one of the plurality of outlets is blocked by the blocker; and/or
the position detector is constructed to be triggered when none of the plurality of outlets is blocked by the blocker.

19. The flow diverter according to any one of claims 1 to 18, further comprising an optocoupler sensor configured to detect a position of the blocker.

20. The flow diverter according to claim 19, wherein the optocoupler sensor is configured to be triggered when one of the plurality of outlets is blocked by the blocker.

21. The flow diverter according to claim 20, wherein a plurality of optocoupler sensors are provided, the plurality of optocoupler sensors corresponding to the plurality of outlets, and one of the plurality of optocoupler sensors being triggered when a corresponding one of the plurality of outlets is blocked by the blocker.

22. The flow diverter according to claim 19, wherein the optocoupler sensor is triggered when the blocker is located at a bottom surface of the flow channel.

23. The flow diverter according to claim 20, wherein:
a mounting hole is formed at each of the plurality of outlets, the optocoupler sensor being disposed in the mounting hole, and the optocoupler sensor being triggered when any one of the plurality of outlets is blocked by the blocker; or
a mounting hole is formed at a corresponding position on a bottom surface of the flow channel, the optocoupler sensor being disposed in the mounting hole, and the optocoupler sensor being triggered when the blocker is located at the bottom surface of the flow channel.

24. A dishwasher, comprising:
the flow diverter according to any one of claims 1 to 23.

25. The dishwasher according to claim 24, further comprising:
a container;
a washing pump disposed below the container and connected to the flow diverter to drive water to flow towards the flow diverter; and
a plurality of spray arms in communication with the plurality of outlets.
